# EUROPEAN PATENT SPECIFICATION

(11) **EP 0 842 692 B1**
(45) Date of publication and mention of the grant of the patent: **13.02.2002**
(21) Application number: 97120304.7
(22) Date of filing: 19.11.1997
(51) Int. Cl.: B01D 53/94, B01J 23/44

(54) **Catalyst for purifying exhaust gas emitted from diesel engine**
Katalysator zur Reinigung von Dieselmotorabgas
Catalysateur pour la purification de gaz d'échappement d'un moteur diesel

(30) Priority: 19.11.1996 JP 30828696
(43) Date of publication of application: 20.05.1998
(73) Proprietor: TOYOTA JIDOSHA KABUSHIKI KAISHA, Aichi (JP); Cataler Industrial Co., Ltd., Ogasa-gun, Shizuoka-ken 437-14 (JP)
(72) Inventor: Ueno, Hideaki, Toyota-shi, Aichi-ken, 471-71 (JP); Nagami, Tetsuo, Toyota-shi, Aichi-ken, 471-71 (JP); Aono, Norihiko, c/o Cataler Ind. Co., Ltd., Ogasa-gun, Shizuoka-ken, 437-14 (JP); Goshima, Hideyuki, c/o Cataler Ind. Co., Ltd., Ogasa-gun, Shizuoka-ken, 437-14 (JP); Kasahara, Koichi, c/o Cataler Ind. Co., Ltd., Ogasa-gun, Shizuoka-ken, 437-14 (JP)
(74) Representative: Leson, Thomas Johannes Alois, Dipl.-Ing.

(56) References cited:
- EP-A- 0 462 593
- EP-A- 0 622 107
- WO-A-93/10885

## Description

### BACKGROUND OF THE INVENTION

### Field of the Invention

The present invention relates to a catalyst for purifying hydrocarbons (hereinafter abbreviated to as "HC"), carbon monoxide (hereinafter abbreviated to as "CO") and soluble organic fractions (hereinafter abbreviated to as "SOF"), which are included in an exhaust gas emitted from a diesel engine, by burning. The present invention further relates to such a catalyst which can inhibit sulfates from being emitted. The sulfates result from SO₃, SO₄²⁻, H₂SO₄, etc., which are included in the exhaust gas emitted from a diesel engine.

### Description of the Related Art

Concerning gasoline engines, the harmful components included in the exhaust gases emitted therefrom have been reduced steadily, because of severe regulations to control the exhaust gases, and because of the development of technologies to comply with the regulations.

On the other hand, the exhaust gases emitted from diesel engines have been controlled under less stricter regulations than those emitted from gasoline engines, and the technologies for processing the exhaust gases emitted from diesel engines have been developed slower so far than those for the exhaust gases emitted from gasoline engines, because of the special circumstances: namely; diesel engines emit the harmful substances mainly as particulates (hereinafter abbreviated to as "PM"). Thus, there has been a long-felt need for developing an exhaust gas purifying apparatus which can securely purify the exhaust gases emitted from diesel engines.

As conventional apparatuses developed so far for purifying the exhaust gases emitted from diesel engines, there have been known an apparatus using a trapping clement, and an open type SOF decomposition catalyst. The apparatus using a trapping element can be classified into an apparatus free from a catalyst, and an apparatus provided with a catalyst.

The conventional trapping type apparatus captures PM in order to inhibit them from being emitted to the outside, and is especially effective to the exhaust gases of high dry-soot content. However, the conventional trapping type apparatus requires a recycling apparatus for burning the captured PM. Accordingly, in view of actual application, there still remain the following problems associated with the conventional trapping type apparatus: namely; its DPF (i.e., diesel particulates filter) is cracked during the recycling operation; its DPF is clogged by ashes; and the conventional trapping type apparatus itself complicates an exhaust system inevitably.

Whilst, one of the open type SOF decomposition catalysts is disclosed in Japanese Unexamined Patent Publication (KOKAI) No. 3-38,255, for example. As set forth in the publication, similarly to catalysts for purifying exhaust gases emitted from gasoline engines, a catalyst is utilized which comprises a catalyst carrier layer formed of activated alumina, etc., and a catalyst ingredient, such as a platinum-group catalyst ingredient, etc., loaded on the catalyst carrier layer. This open type SOF decomposition catalyst has a disadvantage in that it removes the dry soot with a low removing rate. However, the quantity of dry soot can be reduced by improving diesel engines or fuels themselves. In addition, engineers have been studying the open type SOF decomposition catalyst intensively so far, because of a big advantage: namely; no recycling apparatus is required of the open type SOF decomposition catalyst. Thus, a further engineering improvement is longed for the open type SOF decomposition catalyst.

However, it is difficult for the open type SOF decomposition catalyst to reduce the PM emission. For instance, the active alumina layer, formed on the open type SOF decomposition catalyst, exhibits a property of adsorbing SO₂ thereon. Consequently, SO₂, included in an exhaust gas emitted from a diesel engine, is adsorbed On the active alumina layer, and the adsorbed SO₂ is released when the open type SOF decomposition catalyst is heated to elevated temperatures. The released SO₂ is then oxidized to SO₃ by the catalytic action of the catalyst ingredient and by oxygen which is present in the exhaust gas in an excessive amount. In addition, SO₂, included in the exhaust gas, is directly oxidized to SO₃ by the oxygen. The resulting SO₃ readily reacts with water vapor which is also present in the exhaust gases in an excessive amount, and turns into sulfates. As a result, there arises a disadvantage in that the open type SOF decomposition catalyst adversely increases the PM emission.

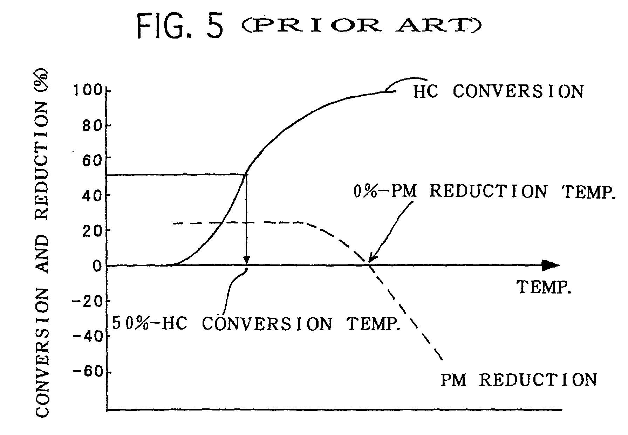

Fig. 5 illustrates how HC and PM are purified when a conventional catalyst is used to purify an exhaust gas emitted from a diesel engine. The conventional catalyst includes an alumina support, and platinum loaded on the alumina support. Note that the purification of HC is expressed by the conversion of HC, and the purification of PM is expressed by the reduction of PM. The following are apparent from Fig. 5: the conversion of HC increases as the temperature of the exhaust gas increases; and PM are reduced by about 20% in a low temperature range, but are increased adversely in a high temperature range, because the reduction of PM bears the minus sign. This drawback can be explained by the fact that the sulfates are generated to increase PM in a high temperature range. Moreover, the temperature at which the purification of PM and the generation thereof in equilibrium, or at which the reduction of PM is zero (herein after referred to as "0%-PM reduction temperature") lies in a temperature range lower than the temperature range where HC can be purified satisfactorily.

In view of the drawback, the applicant of the present invention proposed a novel catalyst for purifying an exhaust gas emitted from a diesel engine in Japanese Unexamined Patent Publication (KOKAI) No. 6-198,181. The catalyst comprises a platinum catalyst which is disposed on an upstream side in an exhaust gas flow, and a palladium catalyst which includes alumina and palladium loaded on the alumina, and which is disposed on a downstream side in the exhaust gas flow.

In the noble exhaust gas purifying catalyst, the platinum catalyst exhibits the oxidizing ability intensely in a low temperature range. Accordingly, the platinum catalyst is good in terms of the purifying performance when starting the diesel engine or running it at a low speed. Thus, the platinum catalyst can oxidize and purify HC and SOF included in the low temperature exhaust gas, such as the exhaust gas emitted from a diesel engine. On the contrary, in the noble exhaust gas purifying catalyst, the oxidation of SO₂ occurs at a low temperature as welt Consequently, the platinum catalyst produces the sulfates actively at a temperature of 300°C or more. In addition, the catalytic reactions produce reaction heat to elevate the temperature on the downstream side of an exhaust system higher than that of the upstream side thereof. Accordingly, if an extra platinum catalyst is disposed on the downstream side and the temperature of the exhaust gas is controlled low on the upstream side, the sulfates are generated when the temperature of the downstream side is 300 °C or more. Thus, the sulfates are generated inevitably in a low temperature range where an independent platinum catalyst little produces the sulfates.

On the other hand, the palladium catalyst exhibits the purifying performance less at a low temperature, but exhibits it satisfactorily at a high temperature. For example, the palladium catalyst oxidizes SO₂ at about 450°C or more which is much higher than the temperature at which the platinum catalyst oxidizes SO₂. As a result, when the palladium catalyst is disposed on a downstream side in the exhaust gas flow, the palladium catalyst can purify HC and SOF which the platinum catalyst cannot purify. In addition, the palladium catalyst can inhibit the sulfates from generating until the temperature ofthe exhaust gas reaches at about 450°C or more. Thus, it is possible for the noble exhaust gas purifying catalyst to control the emission of the sulfates in a low temperature range.

To summarize, the platinum catalyst is not appropriate for purifying the exhaust gas emitted from a diesel engine whose temperature is lower than that of the exhaust gas emitted from a gasoline engine, because it exhibits the oxidizing activity too intensely. Consequently, it is possible to think of employing a palladium catalyst only. However, when the conventional palladium catalyst is used independently, there arises a drawback in that the conventional palladium catalyst cannot exhibit the purifying activity against HC and SOF satisfactorily.

Moreover, the good catalytic activity of the noble exhaust gas purifying catalyst may be deteriorated because the sulfates may be adsorbed on the alumina to cover up the palladium catalyst.

In view of above, one can think of increasing the loading amount of palladium. However, the inventors of the present invention discovered the following facts: the 0%-PM reduction temperature is moved to a low temperature side by increasing the loading amount of palladium; and accordingly the temperature range where the sulfates are generated is moved to a low temperature side so that the temperature window where the emission of the sulfates can be controlled are narrowed eventually.

The WO-A-93/10885 discloses a catalyst comprising (i) a refractory carrier which may be a ceramic material, (ii) a coating of a catalytic material which is disposed on the carrier and is consisting essentially of a combination of ceria and a bulk second metal oxide, wherein ceria and the bulk second metal oxide each comprises from 5 to 95 % by weight of the combination, and (iii) optionally palladium which is applied onto the catalytic material in an amount ranging from about 0.1 to 200 g/ft.

The EP-A-0 462 593 discloses a catalyst having (i) a catalyst component carrying layer made of a refractory three-dimensional structure, such as ceramics foams, open-flow-type ceramics honeycombs, wall-flow-type honeycomb monolith, open-flow-type metal honeycombs, foamed metals or metal meshes, etc., and (ii) a catalyst component containing (a) a refractory inorganic oxide, such as activated alumina, silica, titania, zirconia, silica-alumina, alumina-zirconia, alumina-titania, silica-titania, silica-zirconia, titania-zirconia, zeolith, etc., (b) at least one noble metal selected from palladium and platinum, and (c) rhodium.

### SUMMARY OF THE INVENTION

The present invention has been developed in view of the aforementioned circumstances. It is therefore an object of the present invention to provide a catalyst for purifying an exhaust gas emitted from a diesel engine, which catalyst can effectively remove HC and SOF by burning, and which can simultaneously control the emission of PM by inhibiting the sulfates from generating.

In accordance with the present invention, a catalyst for purifying an exhaust gas emitted from a diesel engine can carry out the aforementioned object, and comprises:
a support including SiO₂ and Al₂O₃ in a mixing ratio of from 98 : 2 to 72 : 28 by weight; and
palladium loaded on the support in an amount of from 0.01 to 0.55 grams with respect to 1 liter of the support;
wherein cerium oxide is not contained.

The present exhaust gas purifying catalyst can be further upgraded by further loading rhodium in an amount of from 0.01 to 0.62 grams with respect to 1 liter of the support.

In accordance with the present exhaust gas purifying catalyst, not only the conversions of HC and SOF can be maintained high, but also the reduction of PM can be kept high up to a high temperature range. Accordingly, the emission of the sulfates can be inhibited effectively.

Moreover, in accordance with the upgraded version of the present exhaust gas purifying catalyst, the reduction of PM can be kept high up to a much higher temperature range. Consequently, the emission of the sulfates can be inhibited much more effectively.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a graph for illustrating the relationship between the loading amount of Pd and the O%-PM reduction temperature, and the relationship between the loading amount of Pd and the 50%-HC conversion temperature;
Fig. 2 is a graph for illustrating the relationship between the content of Al₂O₃ in a coating composition and the reduction of PM when the temperature of an exhaust gas was held at 200°C;
Fig. 3 is a graph for illustrating the relationships between the temperature of an exhaust gas at the inlet of catalysts and the reduction of PM exhibited by the catalysts;
Fig. 4 is a graph for illustrating the relationship between the loading amount of Rh and the O%-PM reduction temperature, and the relationship between the loading amount of Rh and the 50%-HC conversion temperature; and
Fig. 5 is a graph for illustrating the relationship between the temperature of an exhaust gas and the conversion of HC exhibited by a conventional catalyst, and the relationship between the temperature of the exhaust gas and the reduction of PM exhibited by the conventional catalyst.

### DETAILED DESCRIPTION OF THE PREFERRED EMBODIMENTS

Having generally described the present invention, a further understanding can be obtained by reference to the specific preferred embodiments.

It is one of the features of the present exhaust gas purifying catalyst that the support is composed of SiO₂ and Al₂O₃ which are mixed in a ratio of from 98 : 2 to 72 : 28 by weight.

Contrary to Al₂O₃, SiO₂ little adsorbs SO₂ thereon. Consequently, SO₂ is kept from being oxidized by the palladium. Thus, the sulfates are inhibited from generating. Moreover, SiO₂ hardly exhibits the drawback associated with Al₂O₃: namely; the adsorbed sulfates cover up the catalyst ingredient (i.e., palladium) to degrade the catalytic activities. As a result, the catalytic ingredient can be prohibited from being poisoned by the sulfates.

However, when a support is formed of SiO₂ alone, and when palladium is loaded on such a support, there arises a problem in that the palladium exhibits the oxidizing activity so less that the resulting exhaust gas purifying catalyst does not effect the HC and SOF purifying performances satisfactorily.

Therefore, in the present exhaust gas purifying catalyst, the support is composed of SiO₂ and Al₂O₃ which are mixed in a ratio of from 98 : 2 to 72 : 28. When the mixing ratio of SiO₂ is less than the ratio, or when the mixing ratio of Al₂O₃ is larger than the ratio, the loaded palladium is poisoned by the adsorbed sulfates. Accordingly, the resulting exhaust gas purifying catalyst is deteriorated in the purifying performances considerably. On the other hand, when the mixing ratio of SiO₂ is more than the ratio, or when the mixing ratio of Al₂O₃ is less than the ratio, the oxidizing activity of the loaded palladium is decreased. Consequently, the resulting exhaust gas purifying catalyst exhibits degraded HC and SOF purifying performances. Thus, when the mixing ratio of SiO₂ and Al₂O₃ falls in the above-described range, the loaded palladium can exhibit the maximum oxidizing activity. Moreover, even when a relatively low temperature exhaust gas, such as an exhaust gas emitted from a diesel engine, is passed through the present exhaust gas purifying catalyst, the present exhaust gas purifying catalyst can inhibit the sulfates from generating. Note that the mixing ratio of SiO₂ and Al₂O₃ can further preferably fall in a range of from 94 : 6 to 77 : 23 by weight.

In addition, in the present exhaust gas purifying catalyst, the loading amount of the palladium is controlled in a range of from 0.01 to 0.55 grams with respect to 1 liter of the support. When the loading amount of the palladium is less than 0.01 gram with respect to 1 liter of the support, the resulting exhaust gas purifying catalyst does not exhibit the catalytic performances fully. On the other hand, when the loading amount of the palladium is more than 0.55 grams with respect to 1 liter of the support, the resulting exhaust gas purifying catalyst exhibits the 0%-PM reduction temperature which is displaced to a low temperature range of 450 °C or less. As a result, the resultant exhaust gas purifying catalyst can hardly inhibit the sulfates from generating. Note that the loading amount of the palladium can further preferably fall in a range of from 0.05 to 0.55 grams with respect to 1 liter of the support.

The present exhaust gas purifying catalyst can further preferably be provided with the rhodium which is loaded on the support in addition to the palladium. Compared with the 0%-PM reduction temperature exhibited by the palladium, the rhodium exhibits the 0%-PM reduction temperature which lies in a higher temperature range. Consequently, the present exhaust gas purifying catalyst can inhibit the sulfates from generating much more effectively.

In the present exhaust gas purifying catalyst, the loading amount of the rhodium can preferably fall in a range of from 0.01 to 0.62 grams with respect to 1 liter of the support. When the loading amount of the rhodium is less than 0.01 gram with respect to 1 liter of the support, such a reduced addition of the rhodium little produces the advantage. On the other hand, when the loading amount of the rhodium is more than 0.62 grams with respect to 1 liter of the support, such an increased addition of the rhodium inevitably pushes up the material cost. In addition, the resulting exhaust gas purifying catalyst unfavorably exhibits the 0%-PM reduction temperature which is displaced to a lower temperature range. Note that the loading amount of the rhodium can furthermore preferably fall in a range of from 0.05 to 0.2 grams with respect to 1 liter of the support.

Further, the support of the present exhaust gas purifying catalyst can be formed as a pellet-shaped support or a honeycomb-shaped support. Alternatively, the support can be coated on the cellular wall surfaces of a honeycomb-shaped support substrate which is formed of cordierite, metal, or the like.

Furthermore, the present exhaust gas purifying catalyst can be used independently, or it can he used in combination with the other catalysts as set forth in Japanese Unexamined Patent Publication (KOKAI) No. 6-198,181.

The present exhaust gas purifying catalyst will be hereinafter described in detail with reference to the following test samples.

### First Test Samples

### (Sample Catalyst No. 1)

90 parts by weight of a commercially available SiO₂ powder, and 10 parts by weight of a commercially available Al₂O₃ powder were mixed. The SiO₂ powder had an average particle diameter of 10 µm. The Al₂O₃ powder had an average particle diameter of 12 µm. Then, distilled water was added to the resulting mixture powder in an appropriate amount to prepare a slurry.

Further, a honeycomb-shaped support substrate was immersed into the resultant slurry. The honeycomb-shaped support substrate was formed of cordierite, was formed as a cylinder shape, and had a diameter of 100 mm and a length of 160 mm. Thereafter, the honeycomb-shaped support substrate was taken out of the slurry, and was blown off to remove the excessive slurry. Finally, the honeycomb-shaped support substrate was dried at 120°C for 2 hours, and was subsequently fired at 500°C for 1 hour. Thus, a coating layer was formed on the honeycomb-shaped support substrate. Note that the coating layer was formed in an amount of 100 grams with respect to 1 liter of the honeycomb-shaped support substrate.

Furthermore, the honeycomb-shaped support substrate provided with the coating layer was immersed into an aqueous solution of palladium ammine (i.e., [Pd(NH₄)₄](OH)₂]). Thereafter, the honeycomb-shaped support substrate was taken out of the aqueous solution, and was blown off to remove the excessive water droplets. Then, the honeycomb-shaped support substrate was dried at 120 °C for 2 hours, and was subsequently fired at 500 °C for 1 hour. Thus, palladium (i.e., Pd) was loaded on the coating layer. Note that the palladium was loaded in an amount of 0.1 gram with respect to I liter of the honeycomb-shaped support substrate. Sample Catalyst No. 1 was thus completed.

### (Sample Catalyst Nos. 2 through 9)

Except that the loading amount of the Pd was varied to 0 gram, 0.01 gram, 0.03 grams, 0.06 grams, 0.2 grams, 0.5 grams, 0.7 grams and 1.0 gram with respect to 1 liter of the honeycomb-shaped support substrate, Sample Catalyst Nos. 2 through 9 were prepared in the same manner as Sample Catalyst No. 1, respectively.

### (Examination and Evaluation)

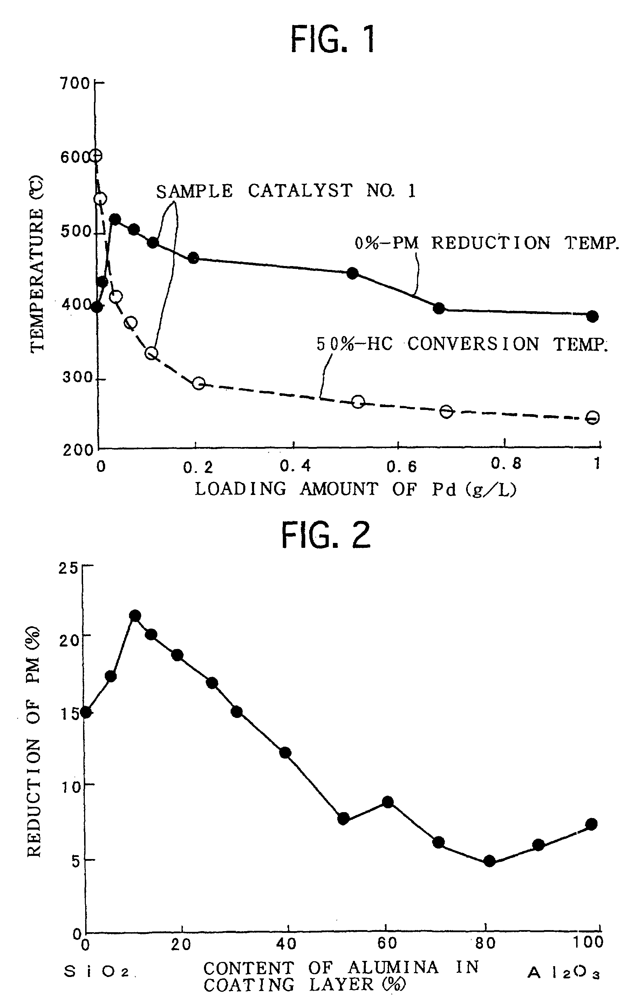

Sample Catalyst Nos. 1 through 9 were installed to an exhaust system of a diesel engine, respectively. The diesel engine had a displacement of 3,600 c.c. Sample Catalyst Nos. 1 through 9 were examined for the HC conversions and the PM reductions while the temperature of an exhaust gas, emitted from the diesel engine, was decreased by 50 °C from 600 °C to 200 °C. The 50%-HC conversion temperature and 0%-PM reduction temperature of Sample Catalyst Nos. 1 through 9 were thus determined. Fig. 1 illustrates the results of the determination.

The following are apparent from Fig. 1. When the loading amount of the Pd was less than 0.01 gram with respect to 1 liter of the honeycomb-shaped support substrate, the 50%-HC conversion temperature was so high that the HC-purifying activity of the resulting sample catalysts was deteriorated. Further, when the loading amount of the Pd was increased, the 50%-HC conversion temperature was decreased so that the oxidizing activity of the resultant sample catalysts was increased. However, the 50%-HC conversion temperature was varied sharply when the loading amount of the Pd was increased up to 0.2 grams with respect to 1 liter of the honeycomb-shaped support substrate, but was varied less even when the loading amount of the Pd was increased more than 0.2 grams with respect to 1 liter of the honeycomb-shaped support substrate.

Moreover, when the loading amount of the Pd was less, the 0%-PM reduction temperature lay in a high temperature range, and accordingly the sulfates were inhibited from generating. However, when the loading amount of the Pd was less than 0.01 gram with respect to 1 liter of the honeycomb-shaped support substrate, and when the loading amount of the Pd was more than 0.55 grams with respect to 1 liter of the honeycomb-shaped support substrate, the 0%-PM reduction temperature was below 450°C. As a result, it was discovered that, even in the low temperature range of 450 °C or less, the sulfates were generated to increase the emission of PM.

Hence, it is understood from the results described above that, in the present exhaust gas purifying catalyst, the loading amount of the Pd preferably falls in a range of from 0.01 to 0.55 grams with respect to 1 liter of the honeycomb-shaped support substrate.

### Second Test Samples

Except that, in the coating layer, the mixing ratio of SiO₂ and Al₂O₃ was altered variously as illustrated in Fig. 2, a plurality of sample catalysts were prepared in the same manner as the First Test Samples. Then, the resultant sample catalysts were tested in the same manner as the First Test Samples to evaluate the PM reduction exhibited by the sample catalysts at 200 °C.

Note that Pd does not exhibit the oxidizing activity at 200 °C. Therefore, the inherent activity of the honeycomb-shaped support substrate provided with the coating layer was evaluated by the aforementioned examination. Specifically, when the mixing ratio of Al₂O₃ fell in a range of from 2 to 28% by weight, the sample catalysts exhibited the PM reduction of 15% or more which was higher than that: of the sample catalyst whose coating layer was formed of SiO₂ alone. On the other hand, when the mixing ratio of Al₂O₃ was more than 28% by weight, the sample catalysts exhibited the PM reduction lower than that of the sample catalyst whose coating layer was formed of SiO₂ alone. It is preferred that the resulting catalyst provided with the SiO₂-and Al₂O₃ composite coating layer exhibits the PM reduction higher than that of the sample catalyst provided with the simple SiO₂ coating layer. Hence, in the coating layer of the present exhaust gas purifying catalyst, the ratio of SiO₂ : Al₂O₃ was controlled in a range of from 98 : 2 to 72 : 28.

### Third Test Samples

### (Sample Catalyst No. 10)

Except that the Pd was loaded in a fixed amount of 0.5 grams with respect to 1 liter of the honeycomb-shaped support substrate, a sample catalyst was prepared in the same manner as Sample Catalyst No. 1 of the First Test Samples. The resulting sample catalyst was further immersed into an aqueous solution of rhodium ammine (i.e., [Rh(NH₄)₆](OH)₃)]). Thereafter, the sample catalyst with the Pd and Rh loaded thereon was taken out of the aqueous solution, and was blown off to remove the excessive water droplets. Then, the sample catalyst was dried at 120 °C for 2 hours, and was subsequently fired at 500 °C for 1 hour. Thus, rhodium (i.e., Rh) was further loaded on the coating layer. Note that the rhodium was loaded in an amount of 0.1 gram with respect to 1 liter of the honeycomb-shaped support substrate. Sample Catalyst No. 10 was thus completed.

### (Sample Catalyst No. 11)

Except that platinum (i.e., Pt) was loaded instead of the Pd in an amount of 0.5 grams with respect to 1 liter of the honeycomb-shaped support substrate by using an aqueous solution of platinum ammine (i.e., [Pt(NH₄)₆](OH)₄)]) instead of the aqueous solution of palladium ammine, a sample catalyst was prepared in the same manner as Sample Catalyst No. 1 of the First Test Samples. The resulting sample catalyst was further immersed into an aqueous solution of rhodium nitrate. Thereafter, the sample catalyst with the Pt and Rh loaded thereon was taken out of the aqueous solution, and was blown off to remove the excessive water droplets. Then, the sample catalyst was dried at 120 °C for 2 hours, and was subsequently fired at 500°C for 1 hour. Thus, Rh was further loaded on the coating layer. Note that the rhodium was loaded in an amount of 0.1 gram with respect to 1 liter of the honeycomb-shaped support substrate. Sample Catalyst No. 11 was thus completed.

### (Sample Catalyst No. 12)

Except that an aqueous solution of platinum ammine was used instead of the aqueous solution of palladium ammine to load the Pt in an amount of 1.5 grams with respect to 1 liter of the honeycomb-shaped support substrate, Sample Catalyst No. 12 was prepared in the same manner as Sample Catalyst No. 1 of the First Test Samples.

### (Examination and Evaluation)

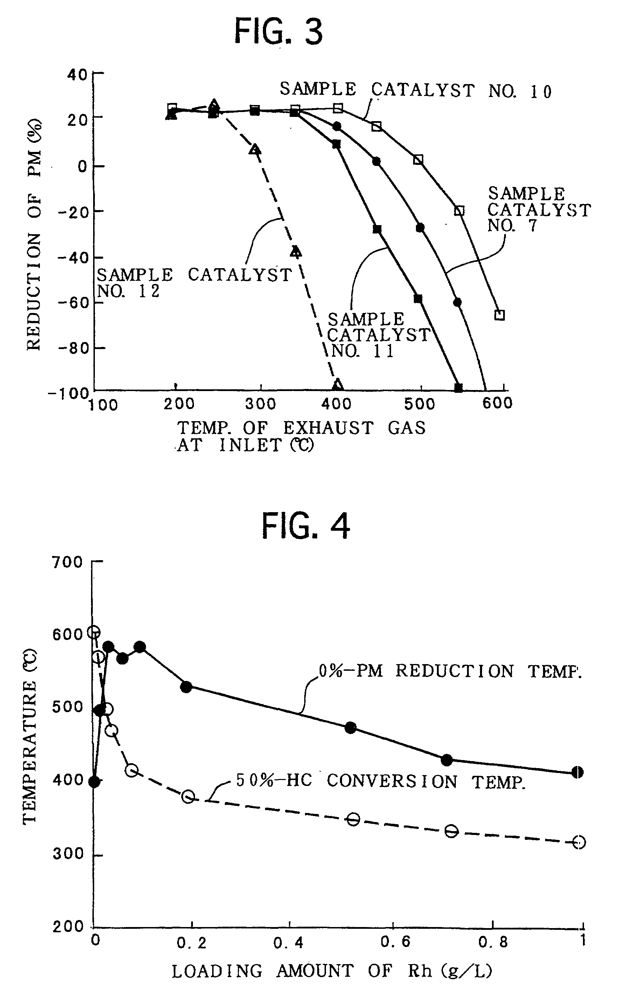

The 3 sample catalysts (e.g., Sample Catalyst Nos. 10 through 12), and Sample Catalyst No. 7 were installed to an exhaust system of a diesel engine, respectively. The diesel engine had a displacement of 3,600 c.c. Note that, on Sample Catalyst No. 7, the Pd was loaded independently in an amount of 0.5 grams with respect to 1 liter of the honeycomb-shaped support substrate. Sample Catalyst Nos. 10 through 12, and Sample Catalyst No. 7 were examined for the PM reductions while the temperature of the exhaust gas, emitted from the diesel engine, was decreased by 50 °C from 600 °C to 200 °C. Fig. 3 illustrates the results of the examination.

It is appreciated from Fig. 3 that Sample Catalyst No. 7 exhibited the PM reduction of 0% or more over a wider temperature than Sample Catalyst No. 12 did. Further, it is evident from Fig. 3 that the sample catalysts with Pd loaded (e.g., Sample Catalyst Nos. 7 and 10) could inhibit the sulfates from generating over a wider temperature range than the sample catalysts with Pt loaded (e.g., Sample Catalyst Nos. 11 and 12) could.

Furthermore, when Sample Catalyst No. 7 and Sample No. 10 are compared, Sample Catalyst No. 10 exhibited the PM reduction of 0% or more over a temperature range which was moved to a higher temperature side than the temperature range where Sample Catalyst No. 7 exhibited the PM reduction of 0% or more. It is thus apparent that the loading of the Rh in addition to the loading of the Pd can furthermore effectively inhibit the sulfates from generating in a higher temperature range.

Moreover, when Sample Catalyst Nos. 10 and 11 are compared with Sample Catalyst No. 7, the following are apparent. As exhibited by Sample Catalyst No. 11, the Pt and Rh loading, instead of the Pd and Rh loading, moved the temperature range, over which Sample Catalyst No. 7 exhibited the PM reduction of 0% or more, to a lower temperature side. On the contrary, as exhibited by Sample Catalyst No. 10, the extra Rh loading in addition to the Pd loading moved the temperature range, over which Sample Catalyst No. 7 exhibited the PM reduction of 0% or more, to a higher temperature side. The advantage was effected to a certain extent when the Rh was loaded in addition to the Pt (e.g., Sample Catalyst No. 11), but was effected less when the Pd was loaded alone (e.g., Sample Catalyst No. 7). Thus, it is now evident that it is preferable to load the Rh in addition to the Pd.

### Fourth Test Samples

Fourth Test Samples were carried out in order to investigate the optimum range of the loading amount of Rh. Except that an aqueous solution of rhodium nitrate was used instead of the aqueous solution of palladium ammine, a plurality of sample catalysts were prepared in the same manner as Sample Catalyst Nos. 1 through 9 of the First Test Samples. Note that, in the resultant sample catalysts, the loading amount of Rb was diversified variously. Then, the sample catalysts were tested in the same manner as the First Test Samples to evaluate the 50%-HC conversion temperatures and the 0%-PM reduction temperatures. Fig. 4 illustrates the results of the test.

Likewise, when the loading amount of Rh is small, the 0%-PM reduction temperature was moved to a higher temperature range. On the other hand, when the loading amount of Rh is too large, the 0%-PM reduction temperature was decreased. In particular, it is appreciated from Fig. 4 that, in the present exhaust gas purifying catalyst, the optimum loading amount of Rh lies in a range of from 0.01 to 0.62 grams with respect to 1 liter of the honeycomb-shaped support substrate where the resulting present exhaust gas purifying catalyst exhibits the 0%-PM reduction temperature of 450 °C or more.

Having now fully described the present invention, it will be apparent to one of ordinary skill in the art that many changes and modifications can be made thereto without departing from the spirit or scope of the present invention as set forth herein including the appended claims.

A catalyst for purifying an exhaust gas emitted from a diesel engine includes a support, and palladium loaded on the support. The support includes SiO₂ and Al₂O₃ in a mixing ratio of from 98 : 2 to 72 : 28 by weight. The palladium is loaded on the support in an amount of from 0.01 to 0.55 grams with respect to 1 liter of the support. The catalyst can oxidize SO₂, included in the exhaust gas, in a higher temperature range than conventional catalysts can. As a result, the catalyst can furthermore effectively inhibit sulfates, resulting from SO₂, from generating.

## Claims

1. A catalyst for purifying an exhaust gas emitted from a diesel engine, comprising:
a support including SiO₂ and Al₂O₃ in a mixing ratio of from 98 : 2 to 72 : 28 by weight; and
palladium loaded on said support in an amount of from 0.01 to 0.55 grams with respect to 1 liter of said carrier;
wherein cerium oxide is not contained.

2. The catalyst according to Claim 1, wherein rhodium is further loaded on said support in an amount of from 0.01 to 0.62 grams with respect to 1 liter of said support.

3. The catalyst according to Claim 1, wherein said support is formed as at least one shape selected from the group consisting of a pellet shape and a honeycomb shape.

4. The catalyst according to Claim 1, wherein said support is coated on cellular wall surfaces of a honeycomb-shaped support substrate.

5. The catalyst according to Claim 1 exhibiting a 0%-PM reduction temperature, being the temperature at which the particulates included in the exhaust gas are removable by 0%, of 450 °C or more.

## Patentansprüche

1. Katalysator zur Reinigung eines aus einem Dieselmotor ausgestoßenen Abgases, umfassend:
eine Trägerbasis, einschließlich SiO₂ und Al₂O₃ in einem Mischungsverhältnis von 98 : 2 bis 72 : 28 (massebezogen); und
Palladium, das auf der Trägerbasis in einer Menge von 0,1 bis 0,55 Gramm bezüglich 1 Liter der Trägerbasis aufgeladen ist;
wobei Ceroxid nicht enthalten ist.

2. Katalysator gemäß Anspruch 1, wobei ferner Rhodium auf der Trägerbasis in einer Menge von 0,01 bis 0,62 Gramm bezüglich 1 Liter der Trägerbasis aufgeladen ist.

3. Katalysator gemäß Anspruch 1, wobei die Trägerbasis wenigstens in einer Gestalt ausgebildet ist, die aus der aus einer Pelletform und einer Wabenform bestehenden Gruppe ausgewählt ist.

4. Katalysator gemäß Anspruch 1, wobei die Trägerbasis auf der zellulären Wandoberfläche eines wabenförmigen Trägerbasissubstrats aufgeschichtet ist.

5. Katalysator gemäß Anspruch 1, der eine 0%-PM-Reduzierungstemperatur von 450 °C oder höher aufweist, welche die Temperatur ist, bei der die in dem Abgas beinhalteten Teilchen um 0% entfernbar sind.

## Revendications

1. Catalyseur pour épurer un gaz d'échappement émis depuis un moteur diesel, comprenant :
un support incluant SiO₂ et Al₂O₃ en un rapport de mélange de 98 : 2 à 72 : 28 en poids ; et
du palladium déposé sur ledit support en une quantité allant de 0,01 à 0,55 gramme par rapport à 1 litre dudit porteur ;
dans lequel de l'oxyde de cérium n'est pas contenu.

2. Catalyseur selon la revendication 1, dans lequel du rhodium est, de plus, déposé sur ledit support en une quantité allant de 0,01 à 0,62 gramme par rapport à 1 litre dudit support.

3. Catalyseur selon la revendication 1, dans lequel ledit support est formé comme au moins une forme choisie dans le groupe qui est constitué d'une forme de pastille et d'une forme de nid d'abeille.

4. Catalyseur selon la revendication 1, dans lequel ledit support est déposé sur des surfaces de parois alvéolaires d'un substrat de support en forme de nid d'abeille.

5. Catalyseur selon la revendication 1 montrant une température de réduction des particules à 0 % étant la température à laquelle les particules incluses dans les gaz d'échappement sont enlevables par 0 %, de 450° C ou plus.
